# FASCICULE DE BREVET EUROPEEN

(11) **EP 0 880 880 B1**
(45) Date de publication et mention de la délivrance du brevet: **31.07.2002**
(21) Numéro de dépôt: 98440112.5
(22) Date de dépôt: 27.05.1998
(51) Int. Cl.: A01D 34/71, A01D 34/64, A01D 43/06

(54) **Tondeuse à gazon à conducteur porté comprenant notamment un collecteur pour l'herbe coupée**
Selbstfahrender Rasenmäher mit Grasfangbehälter
Riding lawn mower with a grass catcher

(30) Priorité: 28.05.1997 FR 9706722; 29.08.1997 FR 9710920
(43) Date de publication de la demande: 02.12.1998
(73) Titulaire: Etesia (Société à Responsabilité Limitée), 67160 Wissembourg (FR)
(72) Inventeur:
(74) Mandataire: Nuss, Pierre

(56) Documents cités:
- EP-A- 0 155 437
- EP-A- 0 745 316
- WO-A-92/13438
- AU-B- 282 007
- DE-A- 2 950 709
- DE-A- 4 403 353
- FR-A- 2 637 450
- US-A- 3 038 288
- US-A- 3 561 282
- US-A- 4 737 067
- PATENT ABSTRACTS OF JAPAN vol. 015, no. 112 (C-0815), 18 mars 1991 & JP 03 004714 A (ISEKI & CO LTD), 10 janvier 1991

## Description

L'invention concerne une tondeuse à conducteur porté comprenant un dispositif de coupe qui achemine l'herbe coupée à travers un conduit de liaison s'étendant vers l'arrière dans un collecteur pour l'herbe coupée, sachant que, pour sa vidange, le collecteur est monté de façon pivotante et de façon à pouvoir être dégagé du conduit de liaison, et qu'un volet mobile est placé dans la zone du conduit de liaison.

On connaît des tondeuses à conducteur porté sous de nombreuses formes de réalisation, qui sont utilisées pour tondre de grandes surfaces de gazon. La collecte et l'élimination de l'herbe coupée dont le volume est proportionnel à la surface de gazon posent problème. Généralement un collecteur est prévu à cet effet sur la tondeuse à conducteur porté, dans lequel l'herbe tondue est acheminée par les lames rotatives du dispositif de coupe ou, ce qui est plus coûteux, par une turbine prévue spécialement à cet effet. Il est important d'introduire l'herbe coupée dans le collecteur aussi haut que possible, car sinon son ouverture donnant sur le dispositif de coupe se boucherait, alors qu'une importante partie du collecteur serait encore vide.

Le dispositif de coupe et le collecteur sont la plupart du temps reliés par un conduit qui, lorsque le collecteur est placé directement à la hauteur du dispositif de coupe, peut aussi être supprimé ou être intégré dans le collecteur.

Dans le cas de la construction dont part le préambule, un volet est prévu sur le conduit de liaison, qui, lorsque le collecteur est en place, est ouvert, si bien que l'herbe coupée peut aller du dispositif de coupe au collecteur. Lorsque l'on retire le collecteur, ce volet se ferme pour empêcher une éjection involontaire d'herbe coupée tandis que le dispositif de coupe tourne encore.

L'inconvénient des constructions antérieurement connues est qu'en détachant le collecteur, une certaine quantité d'herbe coupée tombe de celui-ci et que des restes d'herbe coupée restent dans le conduit de liaison entre le dispositif de coupe et le collecteur. Cela vaut à la fois pour des tondeuses à conducteur porté présentant un système de vidange en hauteur, dans le cas duquel le collecteur, pour être vidé, est levé au moyen d'un dispositif de levage et son contenu déversé dans des conteneurs ou des camions à hautes parois, et pour celles vidées normalement au niveau du sol.

Par ailleurs, on connaît par le document EP-A-0 155 437 une tondeuse à conducteur porté correspondant au préambule de la revendication 1. Toutefois, ce document ne décrit aucun moyen facilitant un vidage dans des conditions difficiles, en particulier dans des réceptacles à seuil de chargement élevé.

A partir de là, le but de l'invention consiste à améliorer la tondeuse à conducteur porté et notamment son collecteur, de manière à ce que le collecteur soit plus facile à manipuler, notamment en évitant que l'herbe coupée ne retombe du collecteur lorsque l'on détache ce dernier de la tondeuse à conducteur porté, et en faisant en sorte que le collecteur recueille même des restes d'herbe coupée demeurés dans le conduit de liaison. De plus, il faut que la tondeuse à conducteur porté et son collecteur se distinguent par un fonctionnement fiable sur la durée, tout en conservant une construction simple, peu sujette aux pannes et avantageuse du point de vue du coût, et notamment qu'ils soient adaptés à la vidange en hauteur.

Conformément à l'invention, ce but est atteint par le fait que le volet est monté sur le collecteur et, pour pouvoir dégager ce dernier du conduit de liaison en le faisant pivoter, peut être déplacé dans une position de fermeture assurant une fermeture du collecteur.

La disposition du volet sur le collecteur lui-même peut être réalisée en sorte que le volet qui est monté dans les cas de constructions connues sur le dispositif de coupe ou solidaire du conduit de liaison rattaché à ce dernier, soit en revanche fixé sur le collecteur. Une autre solution consiste à laisser l'ancien volet à l'endroit où il est monté et à en prévoir un second sur le collecteur.

Le fait que le volet ferme le collecteur après, pendant et éventuellement avant que celui-ci ne soit dégagé du conduit de liaison en le faisant pivoter empêche de manière fiable que de l'herbe coupée n'en sorte inopinément. Le collecteur peut alors pivoter ou être déplacé à volonté, ce qui est surtout avantageux dans le cas de constructions avec vidange en hauteur.

Il est particulièrement avantageux de disposer le volet de manière à ce que, lors de la fermeture, il déplace de l'herbe coupée se trouvant dans le conduit de liaison vers le collecteur. D'une part, le conduit de liaison est ainsi automatiquement nettoyé et, d'autre part, son volume intérieur est au moins en partie, de préférence entièrement utilisé pour recueillir l'herbe coupée.

Le volet achemine particulièrement efficacement l'herbe coupée demeurée dans le conduit de liaison vers le collecteur lorsque le contour du volet correspond quasiment à la section intérieure du conduit de liaison. Le volume d'herbe se trouvant dans le conduit est alors poussé dans le collecteur sur toute la largeur du conduit et à cette occasion, éventuellement compacté.

Si le volet est appliqué de façon mobile avec son extrémité libre contre le conduit de liaison ou contre le carter du dispositif de coupe, il est possible de procéder au réglage de la hauteur de coupe du dispositif de coupe en le déplaçant par rapport au collecteur éventuellement rempli et donc lourd, collecteur dont il est alors inutile de modifier la position lors du réglage de la hauteur.

Le volet est opportunément relié à un dispositif qui, lorsque le collecteur est dégagé de la tondeuse à conducteur porté, passe automatiquement de la position ouverte à la position fermée. Cette commande pour le déplacement du volet est, de préférence, disposée sur le collecteur et réalisée en tant que système hydraulique.

Du point de vue de la construction, il est particulièrement avantageux que le volet en position ouverte fasse fonction de paroi latérale, notamment de paroi du fond, du conduit de liaison et que le volet soit monté de façon pivotante sur le bord inférieur de l'ouverture où débouche le collecteur. Cela permet de dégager de façon optimale le conduit.

Notamment lorsque le volet fait office de fond du conduit de liaison, il conviendrait qu'il remonte vers l'arrière du dispositif de coupe vers le collecteur. Cela achemine l'herbe coupée vers le haut dans le conduit, si bien qu'elle pénètre aussi haut que possible dans le collecteur et permet ainsi un remplissage optimal de celui-ci.

La mise en oeuvre de la construction selon l'invention est particulièrement conseillée pour des tondeuses à conducteur porté comportant un dispositif de vidange en hauteur. La fermeture du collecteur au moyen du volet permet une grande variabilité dans l'enchaînement des mouvements du collecteur pendant la vidange. Cela vaut notamment aussi lorsqu'à cette occasion des mouvements pivotants se produisent, qui sont dus à des bras de levier en parallélogramme munis de vérins.

Pour vider le collecteur, il peut suffire d'ouvrir le volet ; on obtient cependant une plus grande section de vidage et donc une vidange plus rapide et une diminution du temps de travail lorsque le collecteur est divisé en une partie-cadre et une partie arrière pivotante. La partie-cadre présente alors opportunément une pièce d'assemblage pour l'extrémité du conduit de liaison qui y est associée. La partie arrière est en majeure partie composée d'un matériau perméable à l'air pour garantir l'évacuation de l'air transporté avec l'herbe coupée.

Une alternative à la disposition sur le collecteur consiste, dans le cadre de l'invention, à monter le volet naturellement sur le conduit de liaison ou sur une partie de celui-ci lorsque le conduit de liaison ou ladite partie de celui-ci suit le déplacement du collecteur lors de la vidange. Le conduit de liaison forme alors à proprement parler une partie du collecteur.

Selon une autre caractéristique de l'invention, la tondeuse peut être munie, en outre, d'un attelage frontal de montage d'outils annexes, tels qu'une balayeuse, une fraise à neige ou une lame frontale, dont les mouvements de manoeuvre et/ou de mise en et hors service sont commandés par le conducteur par l'intermédiaire d'une commande centralisée et sont assurés par des moyens mécaniques, hydrauliques ou pneumatiques raccordés au dispositif central de distribution pneumatique ou hydraulique ou à une commande mécanique. Ainsi, il est possible de réaliser une machine polyvalente trouvant également son application dans d'autres domaines de l'entretien de grands espaces, de sorte que son coût horaire d'exploitation peut être notablement réduit.

Dans le cas de mise en oeuvre d'une balayeuse à brosse rotative entraînée par un moteur hydraulique ou pneumatique, cette dernière peut avantageusement être équipée d'un moyen d'aspiration des déchets balayés consistant en une turbine, également entraînée hydrauliquement ou pneumatiquement, aspirant lesdits déchets directement dans l'enceinte de balayage et les propulsant à travers un conduit de liaison dans le collecteur. Afin d'éviter un dégagement de poussières au niveau du collecteur, ce dernier est pourvu, à sa jonction avec le conduit de liaison à la turbine, d'un moyen de filtrage et de précipitation des poussières, sou forme de filtre à plaques ou centrifuge.

Conformément à une autre caractéristique de l'invention, la colonne de direction de la tondeuse peut être pourvue de moyens de réglage en inclinaison et en hauteur de la colonne de direction. Une telle réalisation permet une adaptation fine des conditions de conduite à la morphologie du conducteur et ainsi de permettre à ce dernier de disposer d'une position de conduite optimale.

Le moyen de réglage en inclinaison de la colonne de direction est avantageusement sous forme d'un secteur circulaire prévu à poste fixe à l'intérieur de l'habillage de ladite colonne de direction, sur un élément de châssis de la tondeuse, et coopérant avec un dispositif de serrage solidaire de l'habillage et actionné par un levier ou analogue monté sur l'extérieur de l'habillage, ce dernier et la colonne de direction étant montés sur le châssis avec possibilité de pivotement dans un plan vertical d'axe longitudinal.

Le moyen de réglage en hauteur de la colonne de direction est préférentiellement constitué par un dispositif de blocage par pincement prévu sur un manchon de guidage d'un élément supérieur coulissant de la colonne de direction, ledit dispositif étant actionné par l'intermédiaire d'un levier de manoeuvre prévu sur l'habillage de la colonne de direction.

D'autres caractéristiques et avantages de l'invention ressortent de la description ci-après d'un exemple de réalisation faite l'appui de dessins schématiques ; les figures montrent :
Figure 1 une vue de côté d'une tondeuse à conducteur porté en position de tonte dont le conduit de liaison est représenté en coupe ;
Figure 2 le processus de fermeture du volet de la tondeuse à conducteur porté selon la figure 1 ;
Figure 3 la tondeuse à conducteur porté de la figure 1 dont le collecteur est en position haute ;
Figure 4 la tondeuse à conducteur porté de la figure 1 dont le collecteur est en position haute et ouverte, et
Figure 5 une vue partielle de côté de la partie avant de la tondeuse à conducteur porté de la figure 1 munie d'un outil frontal annexe.

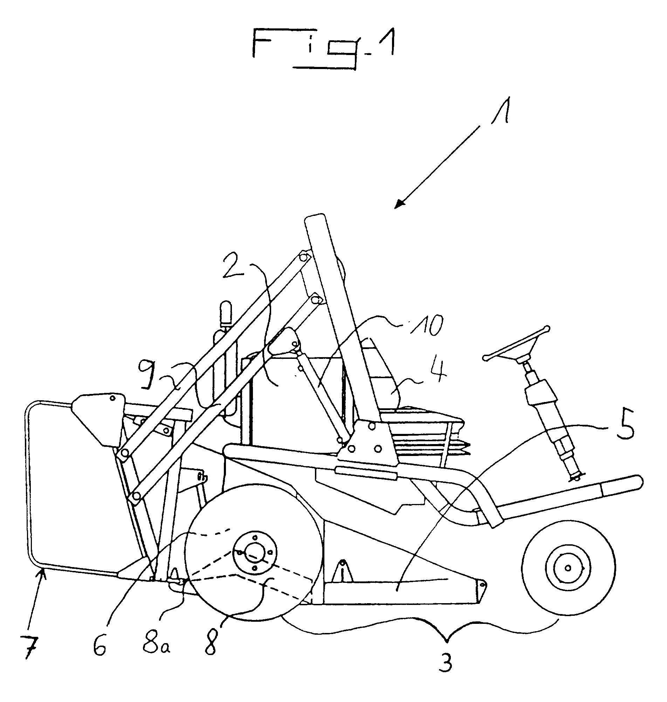

Sur la figure 1, on voit une tondeuse à conducteur porté 1 qui est entraînée par un moteur 2 et qui passe avec ses roues 3 sur le sol à tondre. Elle présente un siège 4 sur lequel est assis le conducteur pendant la tonte pour conduire la tondeuse à conducteur porté. Sous le siège du conducteur 4 se trouve le dispositif de coupe 5 qui présente deux lames tournant en sens inverse et disposées côte à côte dans la direction d'avancement. Le sens de rotation des lames rotatives est tel qu'elles tournent vers l'avant sur les côtés du dispositif de coupe, tandis qu'elles tournent vers l'arrière au milieu. Cela achemine l'herbe coupée saisie par le dispositif de coupe vers l'arrière, dans un conduit de liaison 6, puis de celui-ci dans un collecteur 7 qui est monté sur l'arrière de la tondeuse à conducteur porté 1. Le conduit de liaison 6 s'étend entre le dispositif de coupe 5 et le collecteur 7, approximativement dans l'espace entre les roues arrière 3, sachant qu'en largeur, il ne dépasse pas de celles-ci et que son étendue longitudinale correspond approximativement à leur diamètre. Il se situe sous le moteur 2 placé derrière le siège du conducteur 4. L'essieu des roues arrière peut traverser le conduit de liaison 6. Au lieu de cela, les roues arrière peuvent être montées en porte-à-faux sur un portique qui s'étend en dehors du conduit de liaison, ou être montées sur le châssis de la tondeuse, sachant que l'entraînement des roues peut être assuré par des moteurs hydrauliques indépendants.

L'important alors est que le fond du conduit de liaison 6 soit formé lors de la tonte par un volet 8 dont l'extrémité arrière est fixée sur le collecteur 7 de manière à pouvoir pivoter autour d'un axe horizontal 8a. Le volet s'étend dans la direction d'avancement entre le bâti du dispositif de coupe 5 et le collecteur 7 et dans la direction transversale, sur toute la largeur du conduit de liaison 6. Son extrémité avant est appliquée de façon mobile contre le dispositif de coupe 5 ou contre son bâti, si bien que sa position sur ce dernier peut être modifiée en cas de réglage de la hauteur de coupe du dispositif de coupe 5.

Le volet 8 formant le fond du conduit de liaison 6 s'étend, tout comme son dessus, du dispositif de coupe 5 vers le haut, en direction du collecteur 7. Cela garantit que l'herbe coupée pénètre aussi haut que possible dans le collecteur 7, de sorte qu'il n'y a pas lieu de redouter un bourrage. Contrairement au dessus du conduit de liaison 6, le volet 8 selon l'invention peut toutefois présenter un pli vers le bas dans sa partie arrière et ainsi, d'une part, agrandir la capacité de l'ensemble du dispositif collecteur et, d'autre part, empêcher l'herbe coupée de glisser en arrière du collecteur 7 vers le dispositif de coupe 5, même lorsque le dispositif de coupe n'est pas en marche. Le tracé coudé vers le bas dans la partie arrière du volet 8 est possible, car, pour dégager le collecteur 7 du conduit de liaison 6, le volet est rabattu en direction de ce dernier. En effet, cela permet de garantir que de l'herbe coupée amassée dans la partie arrière du conduit de liaison 6 soit poussée dans le collecteur 7.

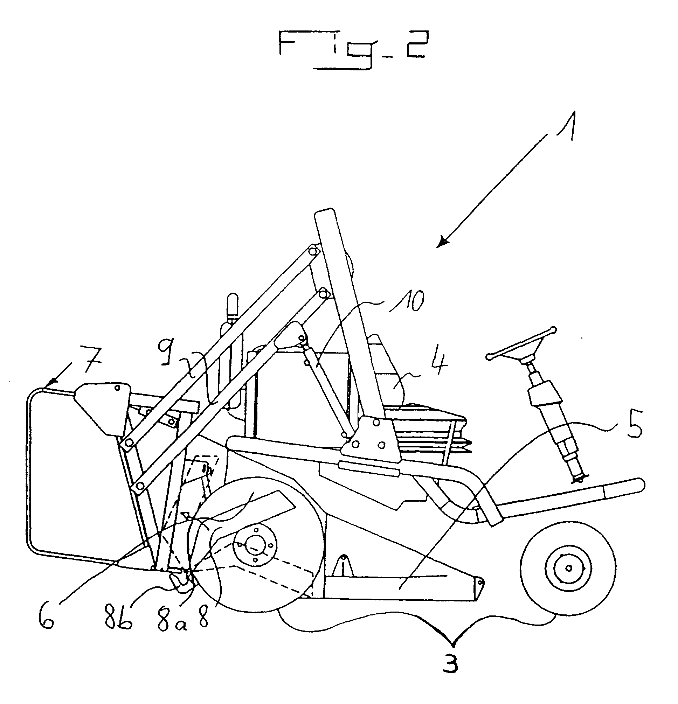

La figure 2 montre le pivotement du volet 8 autour de son axe horizontal qui se situe sur l'arête inférieure du collecteur 7 qui est tournée vers le conduit de liaison 6. Comme on le voit sur le dessin, à cette occasion non seulement l'herbe coupée se trouvant derrière le point de rebroussement du volet 8 est compactée dans le collecteur comme décrit précédemment, mais également des parties essentielles du conduit de liaison 6 sont débarrassées de l'herbe coupée. Il s'agit là notamment de ses parois sur lesquelles passe le volet lorsqu'il pivote et qui racle ce faisant l'herbe coupée qui y adhère. En outre, une fois le collecteur 7 dégagé, il n'y a plus de restes d'herbe coupée sur le fond du conduit de liaison 6, étant donné que celui-ci est formé par le volet 8 qui, après avoir pivoté, transporte les restes d'herbe coupée qui y adhérent dans le collecteur 7. Le conduit de liaison 6 est ouvert vers le bas lorsque le volet 8 est en position fermée.

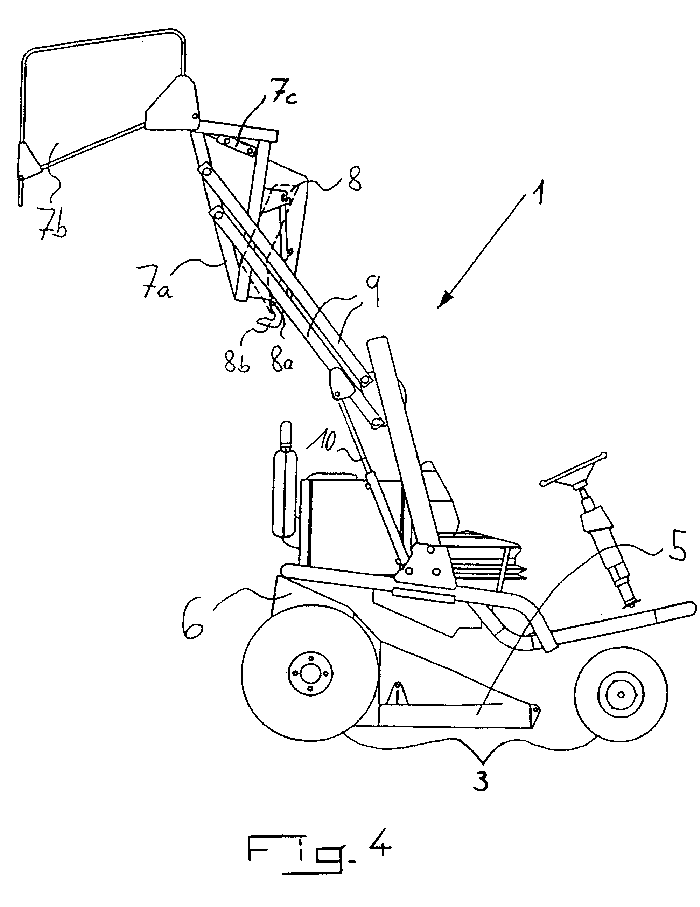

En outre, la figure 2 montre que le volet 8 présente un crochet 8b, et ce, opportunément à l'opposé de son axe de pivotement 8a. Ce crochet maintient le collecteur 7 en position fermée pendant le fonctionnement de la tondeuse, tandis que, lorsque le volet pivote vers le haut, il ne libère ce verrouillage de préférence qu'à la fin du pivotement, si bien que le collecteur peut s'ouvrir et être vidé, ce qui sera décrit ultérieurement en relation avec la figure 4.

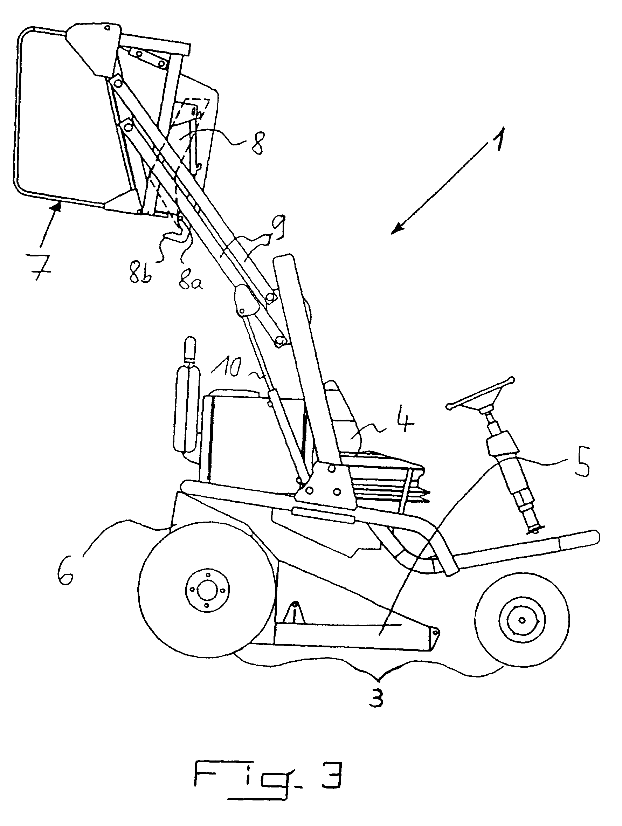

Sur la figure 3, le collecteur 7 a pivoté vers le haut par le biais d'un dispositif de vidange en hauteur formé par des bras de levier en parallélogramme 9 et des vérins 10. On voit ici particulièrement bien l'avantage essentiel que représente le volet construit conformément à l'invention, étant donné que le volet 8 empêche efficacement l'herbe coupée de tomber du collecteur 7, même lorsque celui-ci est dégagé du conduit de liaison 6. A cet effet, le volet 8 est étroitement appliqué contre les bords de l'ouverture du collecteur 7 qui a relié ce dernier au conduit 6. A présent, lorsqu'il est levé, le collecteur 7 se trouve toujours derrière le reste de la tondeuse à conducteur porté 1, toutefois non plus légèrement au-dessus du sol, mais à un niveau situé au-dessus du siège du conducteur 4.

Sur la figure 4, le collecteur 7 est représenté à l'état ouvert. Pour l'ouvrir, on fait pivoter sa partie arrière 7b de 90° par rapport au cadre 7a fixe, autour d'un axe horizontal s'étendant transversalement à la direction d'avancement de la tondeuse à conducteur porté 1 et situé sur le dessus du collecteur, à l'occasion de quoi le collecteur s'ouvre sur toute la section. Cela s'effectue à l'aide d'un vérin 7c qui se trouve également sur le dessus du collecteur. Cependant le volet 8 reste en position fermée. Bien entendu, il serait également possible de procéder à un vidage du collecteur en ouvrant ce volet et en faisant pivoter l'ensemble du collecteur 7.

D'une manière générale, on peut noter que l'on se trouve bien sûr également dans le cadre de l'invention lorsque le volet agit à l'extrémité avant du conduit de liaison, que le conduit de liaison dans sa totalité, ainsi que le collecteur servent à collecter l'herbe coupée et que ce dernier pivote en même temps que le volet pour vider le dispositif de coupe, en s'éloignant du dispositif de coupe.

Toutes les constructions selon l'invention permettent d'étancher fiablement le collecteur au niveau de son ouverture communiquant avec le dispositif de coupe, et garantissent ainsi plusieurs possibilités de manipuler le collecteur, sans risque que de l'herbe coupée ne tombe de ce dernier. En outre, le volet selon l'invention peut très avantageusement servir de moyen pour déboucher le conduit de liaison.

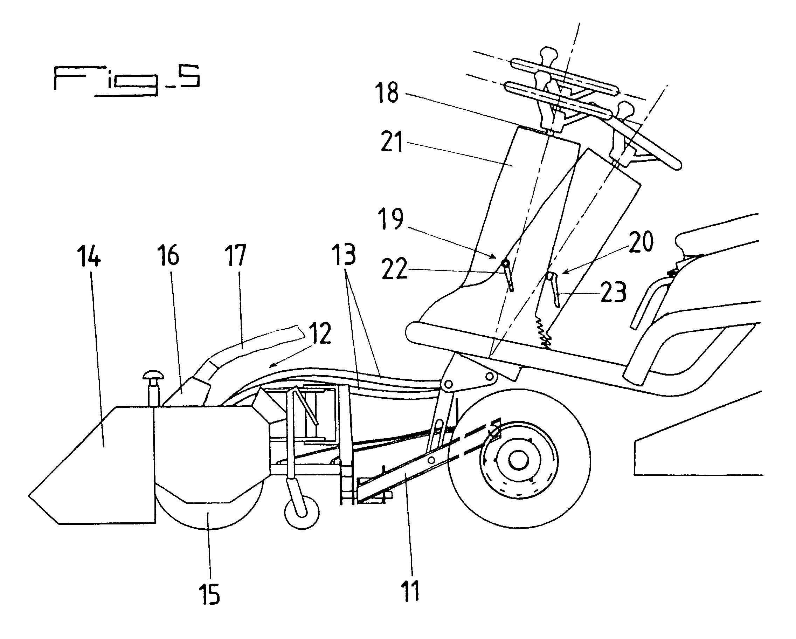

La figure 5 des dessins annexés représente l'adaptation, en partie avant de la tondeuse, d'un attelage frontal 11 de montage d'outils annexes 12, tels qu'une balayeuse, une fraise à neige ou une lame frontale. Dans le mode de réalisation selon la figure 5, l'outil annexe 12 est sous forme d'une balayeuse, dont les mouvements de manoeuvre et/ou de mise en et hors service sont commandés par le conducteur par l'intermédiaire d'une commande centralisée et sont assurés par des moyens mécaniques, hydrauliques, pneumatiques ou mécaniques 13 raccordés, le cas échéant, au dispositif central de distribution pneumatique ou hydraulique de la tondeuse ou à une commande mécanique. Une telle balayeuse 12 peut être munie, comme le montre la figure 5, d'un bac 14 de réception des déchets projetés par sa brosse rotative 15.

L'attelage frontal 11 permet la transformation de la tondeuse en une machine polyvalente pouvant être utilisée dans le cadre d'autres tâches d'entretien de grands espaces, même hors des périodes de tonte, à savoir pour le balayage ou encore pour dégager la neige dans des allées, voire sur des petites routes. Il en résulte que la rentabilité de la tondeuse, en terme de durée annuelle d'exploitation, est notablement améliorée.

Dans le cas de mise en oeuvre d'une balayeuse 12 à brosse rotative 15 entraînée par un moteur hydraulique ou pneumatique ou mécaniquement, cette dernière peut avantageusement être équipée d'un moyen 16 d'aspiration des déchets balayés consistant en une turbine s'étendant en avant et au-dessus de la brosse rotative 15, cette turbine étant également entraînée hydrauliquement, pneumatiquement ou mécaniquement, aspirant lesdits déchets directement dans l'enceinte de balayage et les propulsant à travers un conduit de liaison 17 dans le collecteur. Afin d'éviter un dégagement de poussières au niveau du collecteur, ce dernier est alors avantageusement pourvu, à sa jonction avec le conduit de liaison à la turbine, d'un moyen de filtrage et de précipitation des poussières, sou forme de filtre à plaques ou centrifuge.

Par ailleurs, la figure 5 des dessins annexés fait ressortir une autre caractéristique de l'invention, selon laquelle la colonne de direction 18 de la tondeuse peut être pourvue de moyens 19 et 20 de réglage en inclinaison et en hauteur de la colonne de direction. A cet effet, la figure 5 présente la colonne de direction 18 dans ses deux positions extrêmes de pivotement et le volant dans ses deux positions extrêmes de réglage en hauteur.

Le moyen 19 de réglage en inclinaison de la colonne de direction 18 peut être sous forme d'un secteur circulaire, non représenté, prévu à poste fixe à l'intérieur de l'habillage 21 de ladite colonne de direction 18, sur un élément de châssis de la tondeuse, et coopérant avec un dispositif de serrage solidaire de l'habillage 21 et actionné par un levier 22 ou analogue monté sur l'extérieur de l'habillage 21, ce dernier et la colonne de direction 18 étant montés sur le châssis avec possibilité de pivotement dans un plan vertical d'axe longitudinal. Ainsi, la colonne de direction 18, avec son habillage 21, peut être pivotée entre les positions extrêmes représentées à la figure 5 et être bloquée dans celle correspondant le mieux au conducteur.

Le moyen 20 de réglage en hauteur de la colonne de direction 18 est préférentiellement constitué par un dispositif de blocage par pincement (non représenté) prévu sur un manchon de guidage d'un élément supérieur coulissant de la colonne de direction, ledit dispositif étant actionné par l'intermédiaire d'un levier de manoeuvre 23 prévu sur l'habillage 21 de la colonne de direction 18.

Les moyens 19 et 20 de réglage en inclinaison et en hauteur de la colonne de direction 18 et leurs parties constitutives ne sont pas représentés en détail sur la figure 5 et ne font pas l'objet d'une description détaillée, leurs principes de fonctionnement et de réalisation étant parfaitement et facilement accessibles à l'homme du métier.

Ainsi, il est possible de procéder rapidement et facilement à un réglage optimal de la position de conduite permettant à l'utilisateur de travailler en conditions parfaites d'ergonomie.

Grâce à l'invention, il est possible de réaliser une tondeuse à gazon à conducteur porté permettant de satisfaire à des conditions de vidage du collecteur difficiles, à savoir directement dans des réceptacles à seuil de chargement élevé, et dont le domaine d'utilisation peut être étendu au-delà de la simple tonte, par mise en oeuvre d'outils annexes.

Bien entendu, l'invention n'est pas limitée au mode de réalisation décrit et représenté aux dessins annexés. Des modifications restent possibles dans le cadre des présentes revendications.

## Revendications

1. Tondeuse à conducteur porté (1) comprenant un dispositif de coupe (5) qui achemine l'herbe coupée à travers un conduit de liaison s'étendant vers l'arrière (6) dans un collecteur arrière (7) pour l'herbe coupée, sachant que, pour son vidage, le collecteur (7) est monté de façon pivotante et de façon à pouvoir être dégagé du conduit de liaison (6), et qu'un volet (8) mobile est placé dans la zone du conduit de liaison (6), **caractérisée en ce que** le volet (8) est monté sur le collecteur (7) et, pour pouvoir dégager ce dernier du conduit de liaison (6) en le faisant pivoter, peut être déplacé dans une position de fermeture provoquant une fermeture du collecteur (7), ou **en ce que** le volet (8) est monté sur le conduit de liaison (6) ou une partie de celui-ci et **en ce que** le conduit de liaison (6) ou ladite partie de celui-ci suit le déplacement du collecteur lors du vidage.

2. Tondeuse à conducteur porté selon la revendication 1, **caractérisée en ce que** le volet (8) est disposé de telle manière que lors de la fermeture, il déplace de l'herbe coupée se trouvant dans le conduit de liaison vers le collecteur (7).

3. Tondeuse à conducteur porté selon la revendication 1, **caractérisée en ce que** le contour du volet (8) correspond quasiment à la section intérieure du conduit de liaison (6).

4. Tondeuse à conducteur porté selon la revendication 1, **caractérisée en ce que** pendant le fonctionnement de la tondeuse, le volet (8) est appliqué de façon mobile avec son extrémité libre contre le conduit de liaison (6) ou contre le carter du dispositif de coupe.

5. Tondeuse à conducteur porté selon la revendication 1, **caractérisée en ce que** le mécanisme de déplacement du volet est placée sur le collecteur (7).

6. Tondeuse à conducteur porté selon la revendication 1, **caractérisée en ce que** pendant le fonctionnement de la tondeuse, le volet (8) fait fonction de paroi latérale du conduit de liaison (6).

7. Tondeuse à conducteur porté selon la revendication 1, **caractérisée en ce que** le volet (8) est monté de façon pivotante sur le bord inférieur de l'ouverture où débouche le collecteur (7).

8. Tondeuse à conducteur porté selon la revendication 1, **caractérisée en ce que** pendant le fonctionnement de la tondeuse, le volet (8) fait office de paroi de fond du conduit de liaison (6).

9. Tondeuse à conducteur porté selon la revendication 1, **caractérisée en ce que**, vu depuis le dispositif de coupe, le volet (8) remonte vers l'arrière au moins dans sa première partie.

10. Tondeuse à conducteur porté selon la revendication 1, **caractérisée en ce que** le collecteur (7) est monté sur la tondeuse à conducteur porté par le biais d'un dispositif de vidange en hauteur.

11. Tondeuse à conducteur porté selon la revendication 10, **caractérisée en ce que** le dispositif de vidange en hauteur est formé par des bras de levier en parallélogramme (9) comportant des vérins (10).

12. Tondeuse à conducteur porté selon la revendication 1, **caractérisée en ce que** le collecteur (7) est composé d'un cadre (7a) et d'une partie arrière (7b)pouvant être dégagée de celui-ci en la faisant pivoter.

13. Tondeuse à conducteur porté selon la revendication 12, **caractérisée en ce que** la section du cadre (7a) est adaptée à l'extrémité du conduit de liaison (6) qui y est associée.

14. Tondeuse à conducteur porté selon la revendication 12, **caractérisée en ce que** la partie arrière (7b) est en majeure partie composée d'un matériau perméable à l'air.

15. Tondeuse à conducteur porté selon la revendication 1, **caractérisée en ce qu'**elle est munie, en outre, d'un attelage frontal (11) de montage d'outils annexes (12), tels qu'une balayeuse, une fraise à neige ou une lame frontale, dont les mouvements de manoeuvre et/ou de mise en et hors service sont commandés par le conducteur par l'intermédiaire d'une commande centralisée et sont assurés par des moyens hydrauliques, pneumatiques ou mécaniques (13) raccordés, le cas échéant, au dispositif central de distribution pneumatique ou hydraulique de la tondeuse ou à un commande mécanique.

16. Tondeuse à conducteur porté selon la revendication 15, **caractérisée en ce qu'**elle comporte une balayeuse (12) à brosse rotative munie d'un bac (14) de réception des déchets projetés par sa brosse rotative (15).

17. Tondeuse à conducteur porté selon la revendication 16, **caractérisée en ce que** la balayeuse à brosse rotative (12) entraînée par un moteur hydraulique ou pneumatique ou mécaniquement, est équipée d'un moyen (16) d'aspiration des déchets balayés consistant en une turbine s'étendant en avant et au-dessus de la brosse rotative (15), également entraînée hydrauliquement, pneumatiquement ou mécaniquement, aspirant lesdits déchets directement dans l'enceinte de balayage et les propulsant à travers un conduit de liaison (17) dans le collecteur.

18. Tondeuse à conducteur porté selon la revendication 1, **caractérisée en ce qu'**elle est munie d'une colonne de direction (18) pourvue de moyens (19 et 20) de réglage en inclinaison et en hauteur de ladite colonne de direction (18).

19. Tondeuse à conducteur porté selon la revendication 18, **caractérisée en ce que** le moyen (19) de réglage en inclinaison de la colonne de direction (18) est sous forme d'un secteur circulaire prévu à poste fixe à l'intérieur de l'habillage (21) de ladite colonne de direction (18), sur un élément de châssis de la tondeuse, et coopérant avec un dispositif de serrage solidaire de l'habillage (21) et actionné par un levier (22) ou analogue monté sur l'extérieur de l'habillage (21), ce dernier et la colonne de direction (18) étant montés sur le châssis avec possibilité de pivotement dans un plan vertical d'axe longitudinal.

20. Tondeuse à conducteur porté selon la revendication 18, **caractérisée en ce que** le moyen (20) de réglage en hauteur de la colonne de direction (18) est préférentiellement constitué par un dispositif de blocage par pincement prévu sur un manchon de guidage d'un élément supérieur coulissant de la colonne de direction (18), ledit dispositif étant actionné par l'intermédiaire d'un levier de manoeuvre (23) prévu sur l'habillage (21) de la colonne de direction (18).

## Patentansprüche

1. Aufsitzrasenmäher (1) mit einer Schneidvorrichtung (5), welche das Mähgut über einen sich nach hinten erstreckenden Verbindungskanal (6) in einen rückwärtigen Sammelbehälter (7) für Mähgut befördert, wobei der Sammelbehälter (7) zu seiner Entleerung in schwenkbarer Art und Weise und in vom Verbindungskanal (6) lösbarer Art und Weise montiert ist, und wobei eine bewegliche Klappe (8) im Bereich des Verbindungskanals (6) angeordnet ist,
**dadurch gekennzeichnet,**
**dass** die Klappe (8) am Sammelbehälter (7) montiert ist und dass die Klappe, um den Sammelbehälter vom Verbindungskanal (6) durch Verschwenken lösen zu können, in eine Schließposition verstellbar ist, welche ein Verschließen des Sammelbehälters (7) bewirkt, oder dass die Klappe (8) auf dem Verbindungskanal (6) oder einem Teilbereich hiervon montiert ist und dass der Verbindungskanal (6) oder der Teilbereich hiervon dem Verschwenken des Sammelbehälters bei der Entleerung folgt.

2. Aufsitzrasenmäher nach Anspruch 1,
**dadurch gekennzeichnet,**
**dass** die Klappe (8) in solcher Art und Weise angeordnet ist, dass sie beim Verschließen das sich in dem Verbindungskanal befindende Mähgut in Richtung des Sammelbehälters (7) bewegt.

3. Aufsitzrasenmäher nach Anspruch 1,
**dadurch gekennzeichnet,**
**dass** die Kontur der Klappe (8) nahezu dem lichten Querschnitt des Verbindungskanals (6) entspricht.

4. Aufsitzrasenmäher nach Anspruch 1,
**dadurch gekennzeichnet,**
**dass** während des Betriebs des Rasenmähers die Klappe (8) in beweglicher Art und Weise mit einem freien Ende am Verbindungskanal (6) oder am Mähwerkgehäuse anliegt.

5. Aufsitzrasenmäher nach Anspruch 1,
**dadurch gekennzeichnet,**
**dass** der Mechanismus für die Verstellung der Klappe auf dem Sammelbehälter (7) angeordnet ist.

6. Aufsitzrasenmäher nach Anspruch 1,
**dadurch gekennzeichnet,**
**dass** während des Betriebs des Rasenmähers die Klappe (8) die Funktion einer Seitenwand des Verbindungskanals (6) ausübt.

7. Aufsitzrasenmäher nach Anspruch 1,
**dadurch gekennzeichnet,**
**dass** die Klappe (8) in schwenkbarer Art und Weise am unteren Rand der Mündungsöffnung des Sammelbehälters (7) montiert ist.

8. Aufsitzrasenmäher nach Anspruch 1,
**dadurch gekennzeichnet,**
**dass** während des Betriebs des Rasenmähers die Klappe (8) die Funktion der Bodenwand des Verbindungskanals (6) ausübt.

9. Aufsitzrasenmäher nach Anspruch 1,
**dadurch gekennzeichnet,**
**dass** die Klappe vom Mähwerk gesehen zumindest in ihrem ersten Teilbereich nach hinten ansteigt.

10. Aufsitzrasenmäher nach Anspruch1,
**dadurch gekennzeichnet,**
**dass** der Sammelbehälter (7) am Aufsitzrasenmäher über eine Hochentleerungsvorrichtung montiert ist.

11. Aufsitzrasenmäher nach Anspruch 10,
**dadurch gekennzeichnet,**
**dass** die Hochentleerungsvorrichtung durch Parallelogrammhebelarme (9) mit Hubzylindern (10) gebildet ist.

12. Aufsitzrasenmäher nach Anspruch 1,
**dadurch gekennzeichnet,**
**dass** der Sammelbehälter (7) aus einem Rahmen (7a) und einem Heckteil (7b) zusammengesetzt ist, welches von diesem durch Verschwenken lösbar ist.

13. Aufsitzrasenmäher nach Anspruch 12,
**dadurch gekennzeichnet,**
**dass** der Abschnitt des Rahmens (7a) an das zugeordnete Ende des Verbindungskanals (6) angepasst ist.

14. Aufsitzrasenmäher nach Anspruch 12,
**dadurch gekennzeichnet,**
**dass** das Heckteil (7b) weitgehend aus luftdurchlässigem Material besteht.

15. Aufsitzrasenmäher nach Anspruch 1,
**dadurch gekennzeichnet,**
**dass** er außerdem mit einer stirnseitigen Montagekupplung (11) für Anbauwerkzeuge (12) versehen ist, wie beispielsweise für eine Kehrmaschine, eine Schneefräse oder ein Frontschild, der Steuerbewegungen und/oder der In- und Außerbetriebnahme vom Fahrzeugführer mittels einer zentralisierten Steuerung gesteuert und durch gegebenenfalls an die pneumatische oder hydraulische zentrale Verteilvorrichtung des Rasenmähers oder an eine mechanische Betätigung angeschlossene hydraulische, pneumatische oder mechanische Mittel (13) sichergestellt werden.

16. Aufsitzrasenmäher nach Anspruch 15,
**dadurch gekennzeichnet,**
**dass** er eine Kehrmaschine (12) mit Drehbürste aufweist, die mit einem Behälter (14) zur Aufnahme der durch ihre Drehbürste (15) hochgewirbelten Abfälle versehen ist.

17. Aufsitzrasenmäher nach Anspruch 16,
**dadurch gekennzeichnet,**
**dass** mit einer Drehbürste (12), welche durch einen hydraulischen oder pneumatischen oder mechanischen Motor angetrieben ist, versehene Kehrmaschine mit einem Mittel (16) zum Ansaugen der zusammengekehrten Abfälle ausgestattet ist, die aus einer Turbine besteht, welche sich vor und oberhalb der Drehbürste (15) erstreckt, und ebenso hydraulisch, pneumatisch oder mechanisch angetrieben ist und die genannten Abfälle direkt in eine Einfassung der Kehrmaschine saugt und über einen Verbindungskanal (17) in den Sammelbehälter befördert.

18. Aufsitzrasenmäher nach Anspruch 1,
**dadurch gekennzeichnet,**
**dass** er mit einer Lenksäule (18) ausgestattet ist, die mit Mitteln (19 und 20) zur Regelung der Neigung und der Höhe der Lenksäule (18) versehen ist.

19. Aufsitzrasenmäher nach Anspruch 18,
**dadurch gekennzeichnet,**
**dass** das Mittel (19) zur Regelung der Neigung der Lenksäule (18) in Form eines Kreissektors ausgebildet ist, der an einem festen Punkt im Inneren einer Verkleidung (21) der genannten Lenksäule (18) auf einem Rahmenelement des Rasenmähers vorgesehen ist und mit einer mit der Verkleidung (21) verbundenen Verriegelungsvorrichtung zusammenwirkt und. durch einen Hebel (22) oder ähnliches, welcher auf der Außenseite der Verkleidung (21) montiert ist, betätigt wird, wobei letzterer und die Lenksäule (18) am Rahmen mit der Möglichkeit zur Verschwenkung in einer zur Längsachse vertikalen Ebene montiert sind.

20. Aufsitzrasenmäher nach Anspruch 18,
**dadurch gekennzeichnet,**
**dass** das Mittel (20) zur Regelung der Höhe der Längssäule (18) bevorzugterweise gebildet ist aus einer Vorrichtung zum Blockieren über ein Verklemmen, welche an einer Führungshülse eines oben liegenden verschiebbaren Elements der Lenksäule (18) vorgesehen ist, wobei die genannte Vorrichtung mittels eines Betätigungshebels (23) betätigt wird, der an der Verkleidung (21) der Lenksäule (18) vorgesehen ist.

## Claims

1. A riding lawn mower (1) comprising a cutting device (5) which delivers cut grass through a rearwardly extending linking conduit (6) to a rear grass collector (7) in which, in order to empty it, the collector (7) is pivotally mounted in such a way that it can be disengaged from the linking conduit (6), and in which a movable flap (8) is located in the region of the linking conduit (6), **characterised in that** the flap (8) is mounted on the collector (7) and, in order to be able to disengage this latter from the linking conduit (6) by pivoting it, it can be moved to a closed position resulting in closure of the collector (7), or **in that** the flap (8) is mounted on the linking conduit 6 or on part of this latter and **in that** the linking conduit (6) or the said part of the latter follows the displacement of the collector on emptying.

2. A riding lawn mower according to Claim 1, **characterised in that** the flap (8) is located in such a way that, on closing, it displaces any cut grass which is in the linking conduit towards the collector (7).

3. A riding lawn mower according to Claim 1, **characterised in that** the contour of the flap (8) corresponds approximately to the interior section of the linking conduit (6).

4. A riding lawn mower according to Claim 1, **characterised in that** during operation of the mower, the free end of the flap (8) is applied in a movable manner against the linking conduit (6) or against the casing of the cutting device.

5. A riding lawn mower according to Claim 1, **characterised in that** the mechanism for displacement of the flap is located on the collector (7).

6. A riding lawn mower according to Claim , **characterised in that** during the operation of the mower, the flap (8) acts as a lateral wall of the linking conduit (6).

7. A riding lawn mower according to Claim 1, **characterised in that** the flap (8) is pivotally mounted on the lower edge of the collector outlet opening (7).

8. A riding lawn mower according to Claim 1, **characterised in that** during the operation of the mower, the flap (8) acts as a back wall of the linking conduit (6).

9. A riding lawn mower according to Claim 1, **characterised in that**, seen from the cutting device, the flap (8) is inclined upwardly towards the back at least in its first part.

10. A riding lawn mower according to Claim 1, **characterised in that** the collector (7) is mounted on the mower by means of a high level emptying device.

11. A riding lawn mower according to Claim 10, **characterised in that** the high level emptying device is formed by the arms of a lever in the shape of a parallelogram (9) having actuators (10).

12. A riding lawn mower according to Claim 1, **characterised in that** the collector (7) comprises a frame (7a) and a rear part (7b) which can be disengaged therefrom by pivoting.

13. A riding lawn mower according to Claim 12, **characterised in that** the section of the frame (7a) is adapted to the end of the linking conduit (6) which is associated with it.

14. A riding lawn mower according to Claim 12, **characterised in that** the rear part (7b) is largely comprised of a material permeable to air.

15. A riding lawn mower according to Claim 1, **characterised in that** it is further provided with frontal linkage (11) for mounting ancillary tools (12), such as a sweeper, snow clearer or a frontal blade, the movements and/or switching on or off of which are controlled by the driver by the means of a centralised command and are put into effect by hydraulic, pneumatic or mechanical means (13) linked, if need be, to the pneumatic or hydraulic central distribution device of the mower or to a mechanical control device.

16. A riding lawn mower according to Claim 15, **characterised in that** it comprises a sweeper (12) with a rotating brush provided with a receptacle (14) for receiving the detritus thrown up by the rotating brush (15).

17. A riding lawn mower according to Claim 16, **characterised in that** the rotary sweeper (12) driven by a hydraulic, pneumatic or mechanical motor, is equipped with means (16) for sucking up the brushed up detritus, comprising a turbine extending forwardly and above the rotating brush (15), also driven hydraulically, pneumatically or mechanically, for sucking the said detritus directly into the brushing area and propelling it through a linking conduit (17) into the collector.

18. A riding lawn mower according to Claim 1, **characterised in that** it is provided with a steering column (18) provided with means (19) and (20) for adjusting the angle and the height of the said steering column (18).

19. A riding lawn mower according to Claim 18, **characterised in that** the means (19) for adjusting the angle of the steering column (18) is in the form of a circular sector in a fixed position within the casing (21) of the said steering column (18), on a part of the chassis of the mower, and co-operating with a clamping device linked to the casing (21) and operated by a lever (22) or the like mounted on the exterior of the casing (21), this latter, and the steering column (18), being mounted on the chassis with the possibility of pivoting in a vertical plane passing through the longitudinal axis.

20. A riding lawn mower according to Claim 18, **characterised in that** the adjusting means (20) on the steering column (18) is preferably constituted by a clamping device provided on a guiding coupling sleeve of an upper sliding element of the steering column (18), the said device being actuated by means of a lever (23) provided on the casing (21) of the steering column (18).
